# EUROPEAN PATENT SPECIFICATION

(11) **EP 1 241 937 B1**
(45) Date of publication and mention of the grant of the patent: **12.05.2004**
(21) Application number: 99958559.9
(22) Date of filing: 03.11.1999
(51) Int. Cl.: A01K 85/02

(54) **A LURE LAUNCHING HOOKS INSTANTLY AT BITE**
FISCHKÖDER MIT AUSFAHRBAREM ANGELHAKEN
HAMECON DE PECHE AU LANCER COMPORTANT UN LEURRE PERMETTANT LA MORSURE INSTANTANEE

(43) Date of publication of application: 25.09.2002
(73) Proprietor: Möller, Lennart Hugo Alexander, 273 97 Tomelilla (SE)
(72) Inventor: Möller, Lennart Hugo Alexander, 273 97 Tomelilla (SE)
(86) International application number: PCT/SE1999/001973
(87) International publication number: WO 2000/025579

(56) References cited:
- FI-B- 43 656
- SE-B- 316 047
- US-A- 994 927
- US-A- 2 261 068
- US-A- 3 230 656

## Description

This invention relates to the old problem of lures dragging in seaweed or getting lost by sticking to stationary obstacles.

### Existing Shortcomings

Efforts which have so far been made in trying to solve the problem of making efficient lures holding their hooks inside until the bite,have failed,apparently due to their pre-requisites, being either that the fish will continue its attack until it has squeezed the lure's -elastic- envelope enough for grasping the passively stored hooks through slits in the envelope or through the envelope as such, or that power exerted from the tag-of-war between the fish (having grasped the lure) and the fisherman,will, by mechanical transmission, make the hooks spread out; see US 994,927(of 1911), 2,261,068 (of 1940) and 3,230,656(of 1964), see also SE 316047 and FI 43656(both of 1968).

None of the aforementioned patents has been efficacious, probably due to their indirectness of the hooking desired in relation to the initial attacking touch of the lure by the fish, giving it time for breaking off the attack.

### The Remedy Provided by the Invention

According to the invention, the hooks will spread out immediately even at an exceedingly small sqeeze of the lure whereby they will, according to the strength of spring preferred by the customer, become pushed, spitted or flung out or even made stab the jaws of the fish.
The time reduction and hook activation by the invention are intended also to reduce the risk of "blind" bites cosiderably, particularly in co-operation with each other.

### Former Application

The basic ideas of the invention have already been presented in my application for a Swedish patent of similar or same solutions, see SE 9803743-5.

This description covers two variations of the lure.

### Particulars which the two Variants Have in Common

The envelope of the lure, having the shape of a fish, can be made of any conventional material. A stripe of its back resp, belly from nose to tail-fen,at a breadth of a few millimetres,is replaced by a rocker-arm having its spindle in the rear part of the lure and, in its standard design, a rocking range up and down of max. 3 or 4 millimetres, its form and colour conforming with the natural outline of the fish-like lure (1).

### Particulars of Variant No.1

In mid the lure and backward from its nose there is a tube, the length of which being approx. 70 per cent of that of the lure (2). In the tube there is a shuttle (3) which can move forth and back in it and within the shuttle a flange (4), part of which being shaped like a nose having its root turned forward. This part of the flange is pressed by spring force from inside the shuttle through a slit in it, being restrained from further sticking out by the inner side of the tube. In the tube, between the shuttle and the nose of the lure, is an expanding spring (5) and attached to the front of the shuttle, running out through an opening in the nose of the lure, is the cord of the lure (6). In the open rear of the shuttle two hooks are mounted by their loops surrounding a horizontal spindle (7). Behind the tube there is a horizontal stopper plug (8) and, obliquely in front of it, two horizontal pins (9).

### Functions of Variant No.1

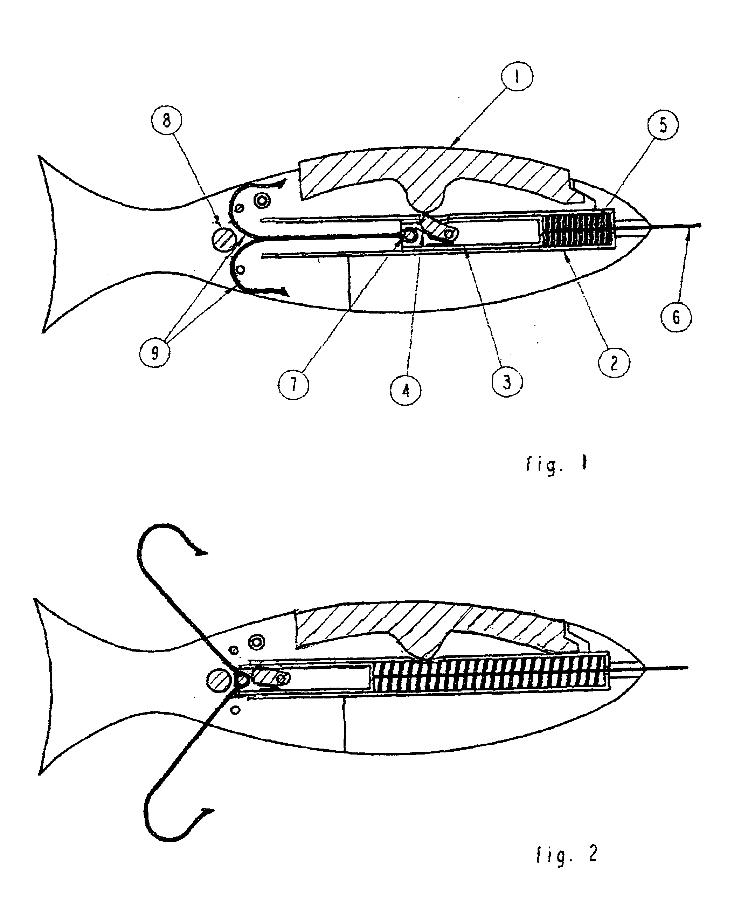

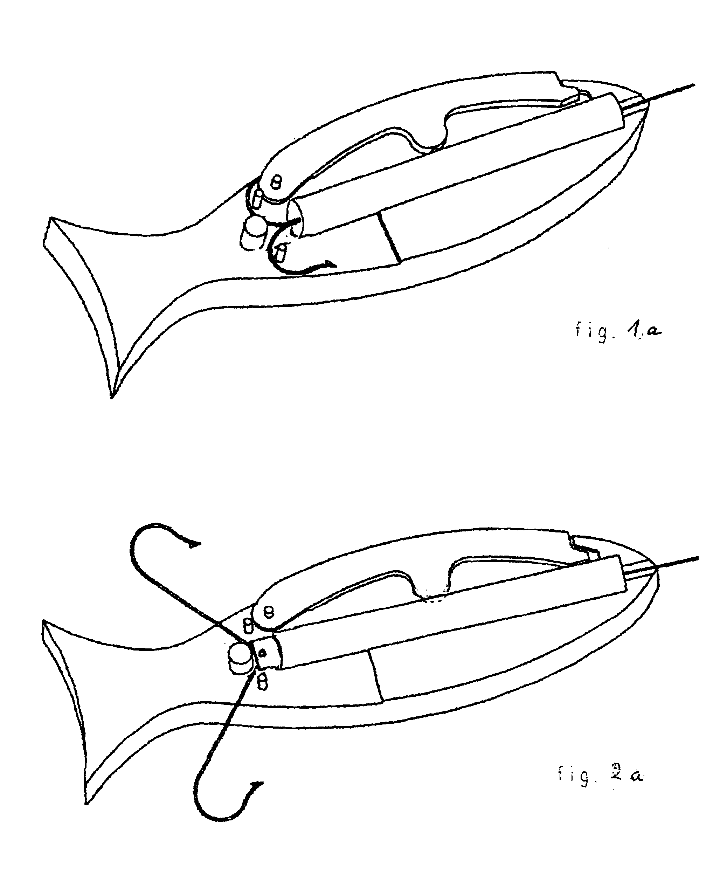

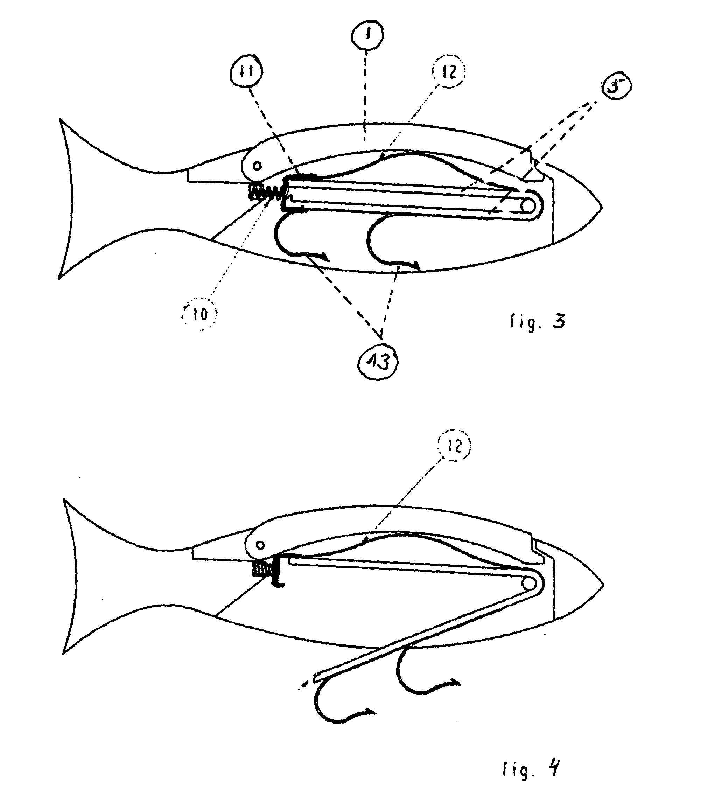

When the lure is ready for fishing, the shuttle has been moved to its front position by pulling the cord, where it holds the spring pressed together and from which it is unable to move backwards due to the flange sticking out through both the slit in the shuttle and another in the tube. A bulge on the upper side of the rocker-arm is then in immediate touch with the tip of the flange's "nose".
At the very moment when the fish pushes up the rocker-arm maximally 3 millimetres,the arm pushes the flange inside the tube whereby the spring flings the shuttle backwards to the stopper-plug which has by then spread out the hooks, one upwards and the other downwards, as shown on Fig. 2 of the 1/3-drawing and the fish will, most probably, get hooked by at least one of them.
Having loosened the fish from the lure, the fisherman pulls the cord whereby the movable parts of the lure will become brought back to their pre-catch positions: the hooks conducted by the stopper-plug and the pins, and the rocker-arm being pushed by the "nose" of the flange. The lure will then be ready for the next catch.

### Particulars of Variant No.2

In the very front of the lure and wound around a horizontal spindle there is a spring with its two legs pointing backwards, reminding of a safety-pin. The end of the lower leg is then pressed and held back in a "pocket" which is attached to the upper leg, but movable a few millimetres forth and back along it. The "pocket" is held in its front position by a small expanding spring (10).
The lower leg bears the hook or hooks, in this description two hooks, turned forward.
They are firmly attached to the leg which is made from hard and stiff material.

Under the rocker-arm there is a strip of elastic steel having a bulge touching the rocker-arm in its middle. The front of the strip is attached to the front part of the upper leg and the rear is attached to the front of the pocket (11).

### Functions of Variant No.2

In the above presentation of the particulars, the situation when the lure is ready for fishing has been described. At the very moment when a fish presses in the rocker-arm by a few millimetres, the steel strip will get slightly straightened out whereby its end pushes the "pocket" a little backwards,however much enough for releasing the lower leg for becoming spread out downwards/forwards through a slit in the envelope to an angle with the lure of e.g. 20 to 40 degrees, as shown on Fig. 4 of the drawing, and one or more hooks will presumably hook the fish by its lower jaw consisting of a hard frame around a weak membrane. When the fish has been loosened from the lure, the fisherman pushes the lower leg until it has regained its place in the pocket(after pressing back the little expanding spring)and the lure is ready for the next catch.

## Claims

1. A lure with a fish-like outline having one or more hooks horizontally stored on the inside until bite, **characterized by** the following distinctive signs:
- a rocker-arm (1), the outer edge of which slightly juts out from theback or belly outline of the lure,
- a trigger mechanism for the hook or hooks (9) on the inside of the lure driven by the force of a spring (5),
- an arrest device (4) for the trigger mechanism being functionally connected to the inner edge of the rocker-arm (1) in a way to become released at bite by the inwards moving rocker-arm, at which the hook or hooks (9) will be swung out with its/their barbed ends through a slit/slits in the lure envelope,driven by the aforementioned spring of the trigger mechanism.

2. A lure according to claim 1 **characterized by** the attachment of a line (6) to the arrest device (4).

3. A lure according to claim 1 or claim 2, **characterized by** the trigger mechanism forming a tube-like passage (2) along the main length of the longitudinal axes of the lure, from the rear of which passage the barbed ends of the hook or hooks (9) extend while their looped ends are swivelling connected with a mobile shuttle (3) which is blockable in the passage (2) against the power of the spring (5) by the arrest device (4),according to which the spring, at relaxing, will fling the shuttle towards a stopper plug (8) at the rear of the passage, which stopper plug simultaneously serves as leader for the flinging out of the hook or hooks (9).

4. A lure according to claim 3 **characterized by** the spring of the trigger mechanism being a concentrirically arranged expanding spring (5),having one end propped against the shuttle (3) and the other against the inside of the front of the passage (2).

5. A lure according to claim 3 **characterized by** the line (6) being the fishing line, connected with the shuttle (3) and leading out through the spring (5) and the mouth of the lure,which enables the angler to retract the hook or hooks to their initial positions of arrest simply by pulling a line.

6. A lure according to claim 1 **characterized by** the following distinctive signs:
- a two-legged spring (5 of fig 3) of safety-pin sort, the closed end of which being wound around a spindle in the lure's head, whereas its two other ends, one upper and the other lower, are stored in a mobile pocket (11),
- a slack expanding spring (10) keeping the pocket pressed against the slightly longer upper leg in its position embracing both legs,
- a trigger mechanism consisting of an elastic steel strip (12) the front end of which being fixed to the front of the upper leg of the spring (5 of fig 3) and the rear end to the pocket (11), while the middle of it is bulging against the inner edge of the rocker-arm (1),
- the lower leg of the spring (5 of fig 3), bearing one or more hooks (13),becoming swung out through a slit in the lure envelope when the pocket is pushed backwards by the steel strip (12) at its alignation by pressure from the inwards moving rocker-arm (1).

## Patentansprüche

1. Angelköder mit einer fischähnlichen Aussenkontur und mindestens einem bis zum Anbiss eines Fisches innen horizontell gelagerten Angelhaken, **gekennzeichnet durch** folgende Merkmale:
- einen Schwingarm (1), dessen Aussenseite die Rückenoder Bauchkontour des Angelköders leicht überragt,
- einen im Inneren des Angelköders angeordneten, **durch** eine Feder (5) beaufschlagten Auslösemechanismus für den mindestens einen Angelhaken (9),
- ein Arretiermittel (4) für den Auslösemechanismus, wobei die Innenseite des Schwingarms (1) mit diesem Arretiermittel derart in Wirkverbindung steht, dass es sich **durch** den bei einem Anbiss des Fisches nach innen bewegenden Schwingarm löst, wodurch der mindestens eine Angelhaken **durch** die Federkraft des Auslösemechanismus getrieben **durch** einen in der Aussenkontur des Angelköders vorgesehenen Schlitz nach aussen schwenkt.

2. Angelköder nach Anspruch 1, **dadurch gekennzeichnet, dass** der Auslösemechanismus mit einer Leine (6) verbunden ist,

3. Angelköder nach Anspruch 2 od 3, **dadurch gekennzeichnet, dass** der Auslösemechanismus eine sich im wesentlichen in der Längsachse des Angelköders über einen Teil seiner Länge erstreckende rohrförmige Führung (2) aufweist, aus deren einem Ende mindestens ein Angelhaken (9) mit seinem Widerhaken herausragt, dessen dem Widerhaken abgewandtes Ende schwenkbar mit einem in der Führung (2) verschiebbar angeordneten Schiffchen (3) verbunden ist, welches durch das Arretiermittel (4) entgegen der Kraft der Feder (5) in der Führung (2) festlegbar ist, wobei sich die Feder nach dem Lösen des Arretiermittels entspannt und das Schiffchen gegen einen am Ende der Führung angeordneten Stopper (8) schiesst, der gleichzeitig als Leiteinrichtung für die Auswärtsschwenkbewegung des mindestens einen Angelhaken dient.

4. Angelköder nach Anspruch 3, **dadurch gekennzeichnet, dass** die Feder des Auslösemechanismus eine in der Führung (2) konzentrisch angeordnete Spiralfeder (5) ist, deren eines Ende sich am Schiffchen (3) und deren anderen Ende sich an dem Angelhaken fernen Ende der Führung abstützt.

5. Angelköder nach Anspruch 4, **dadurch gekennzeichnet, dass** die Leine (6) eine mit dem Schiffchen (3) verbundene Angelsehne ist, die durch die Feder (5) und dem Mund des Köders läuft, was dem Angler ermöglicht den mindestens einen Angelhaken durch einen Ruck an der Angelsehne in seine Ausgangsposition zurückzuführen.

6. Angelköder nach Anspruch 1, **gekennzeichnet durch** folgende Merkmale:
- eine zweischenklige Feder (5 in Fig 3) nach Art einer Sicherheitsnadel, deren geschlossenes Ende um eine am Kopfende des Angelköders angeordnete Spindel gewunden ist, während die freien Ende ihrer beiden Schenkel von einer beweglichen Tasche aufgeaufgenommen sind,
- eine lockere Druckfeder (10) welche, in ihrer die beiden Schenkel umfassenden Position, die Tasche gegen den etwas längeren oberen Schenkel gedrückt hält,
- ein Auslösemechanismus bestehend aus einem gegen die Innenseite des Schwingarmes (12) aufgebauchten elastischen Stahlband (12), dessen vorderes Ende mit dem Vorderteil des oberen Schenkels der Feder (5 von Fig 3) befestigt ist und dessen hinteres Ende gegen die Tasche anstösst,
- der untere Schenkel der Feder ist mit mindestens einem Angelhaken versehen,
- beim Anbiss eines Fisches drückt der Schwingarm (1) das Stahlband flacher, wodurch die Tasche sich gegen die Kraft der Druckfeder verschiebt und den mit Haken versehenen unteren Schenkel der Feder (5 in Fig 3) freigibt, so dass dieser **durch** einen Schlitz im Ködergehäuse nach aussen schwanken kann.

## Revendications

1. Un leurre avec une silhouette ressemblant à un poisson ayant un ou plusieurs hameçons horizontalement rangées à l'intérieur jusqu'a la morsure, **caractérisé par** les signes distinctifs suivant:
- un levier de bascule, ci-dessous nommé bascule (1), le bord extérieur duquel saillit quelqe peu hors du dos ou du ventre de la silhouette du leurre,
- un mécanisme de gâchette pour le ou les hameçons (9) à l'intérieur du leurre, entrainé par un ressort (5),
- un dispositif d'arrêt (4) du mécanisme de gâchette pour étant fonctionellement connecté au bord intérieur de la bascule de manière à ètre relaché à la morsure par la bascule rentrant vers l'intérieur, par là causant l'ejection du ou des hameçons à travers une ou plusieurs fentes dans l'enveloppe du leurre, entrainés par le ressort du mécanisme de gâchette cité précédemment.

2. Un leurre d'après revendication 1, **caractérisé par** l'attachement d'une corde (6) au dispositif d'arrêt du mécanisme.

3. Un leurre d'après revendication 1 ou 2, **caracterisé par** le mécanisme de gâchette formant un passage en forme de tube le long de l'axe horizontal du leurre, à l'extrémité de quel tube les extrémités barbees du ou des hameçons (9) avancent tandis que leur extrémités bouclées sont pivotent connectées à une navette mobile (3) qui se bloque dans le passage (2),contre-balancé par le ressort (5), du dispositif d'arrêt, selon lequel le ressort (5) , en se relâchant, va lancer la navette vers un tampon ancré (8) à l'arriêre du passage, lequel ancrage sert simultanément de conducteur à l'ejection du ou des hameçons.

4. Un leurre d'après revendication 3, **caractérisé par** le ressort du mécanisme de gâchette étant un ressort à détente concentrique (5), ayant une extrémité étayée contre la navette (3) et l'autre extrémité contre l'intérieure du bout du passage (2)

5. Un leurre d'après revendication 3, **caractérisé par** la corde (6) étant une ligne de pêche, connectée à la navette et ressortant à travers le ressort (5) et la bouche du leurre, ce qui permet au pêcheur de rétracter le ou les hamecons à leur position initiale d'arrêt simplement en tirant la ligne.

6. Un leurre d'après revendication 1, **caractérisé par** les signes distinctifs suivant:
- un ressort à deux branches (5 de la fig 3) de type épingle de sûreté dont l'extrémité fermée est entourtillée dans la tête du leurre, tandis que ses deux bouts (5), une supérieure et l'autre inférieure, sont rangées dans une poche mobile (11),
- un lache ressort à détente (10) pressant, dans sa position embrassant les bouts (5), la poche contre le bout supérieure, étant un peu plus longue que le bout inférieure,
- un mécanisme de gâchette consistant en une bandelette d'acier élastique (12) dont l'extrémité avant est fixé à l'avant de la branche supérierure du ressort (5 de la fig 3) et l'extrémité arrière à la poche mobile, tandis que la partie médiane (courbé) de la bandelette appuie contre la coté inférieure de la bascule (1).,
- la branche inférieure du ressort (5 de la fig 3) porte un ou plusieurs hameçons (13) étant éjectés à travers une fente dans l'enveloppe du leurre quand la poche (11) est repoussée en arrière par la bandelette dans sa alignation par pression da la bascule (1).
